(19) Europäisches Patentamt
European Patent Office
Office européen des brevets

(11) **EP 2 028 511 A1**

(12) **EUROPEAN PATENT APPLICATION**

(43) Date of publication:
**25.02.2009 Bulletin 2009/09**

(51) Int Cl.:
***G02B 6/35*** *(2006.01)*

(21) Application number: **08009709.0**

(22) Date of filing: **28.05.2008**

(84) Designated Contracting States:
**AT BE BG CH CY CZ DE DK EE ES FI FR GB GR HR HU IE IS IT LI LT LU LV MC MT NL NO PL PT RO SE SI SK TR**
Designated Extension States:
**AL BA MK RS**

(30) Priority: **20.08.2007 JP 2007213756**

(71) Applicant: **Fujitsu Limited**
**Kawasaki-shi, Kanagawa 211-8588 (JP)**

(72) Inventors:
• **Shimizu, Takashi**
**c/o Fujitsu Ltd.**
**Kawasaki-shi,**
**Kanagawa 211-8588 (JP)**

• **Mori, Kazuyuki**
**c/o Fujitsu Ltd.**
**Kawasaki-shi,**
**Kanagawa 211-8588 (JP)**
• **Shibata, Kohei**
**c/o Fujitsu Ltd.**
**Kawasaki-shi,**
**Kanagawa 211-8588 (JP)**

(74) Representative: **HOFFMANN EITLE**
**Patent- und Rechtsanwälte**
**Arabellastrasse 4**
**81925 München (DE)**

(54) **Optical switch and control method**

(57) An optical switch includes plural ports aligned; a spectroscopic element that divides a light input to one of the ports that is an input port; plural mirrors that are aligned in a spectral direction of the light divided, and reflect the light divided; and a control unit that changes an angle of each of the mirrors so that the light reflected is output to one of the ports that is an output port, and shifts the angle in the spectral direction and a direction perpendicular to the spectral direction to attenuate the light output from the output port.

FIG.1

**Description**

CROSS-REFERENCE TO RELATED APPLICATIONS

This application is based upon and claims the benefit of priority from the prior Japanese Patent Application No. 2007-213756, filed on August 20, 2007, the entire contents of which are incorporated herein by reference.

BACKGROUND OF THE INVENTION

1. Field of the Invention

The present invention relates to a technology of an optical switch that selectively switches a path of a light according to each wavelength.

2. Description of the Related Art

In an optical transmission system, wavelength division multiplexing (WDM) is conventionally used to increase the number of channels to expand a transmission capacity. As a device that has plural optical input/output ports and can selectively operate a multiplexed WDM optical signal in the form of a light, an optical switch is used (see Japanese Patent Application Laid-open No. 2004-70053).

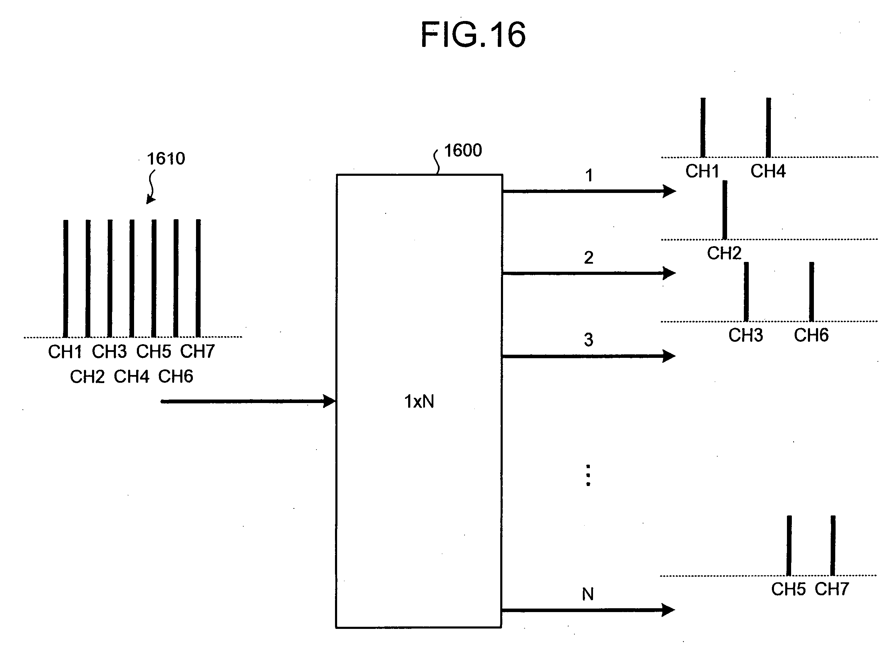

Fig. 16 is a schematic of a conventional optical switch. As shown in Fig. 16, an optical switch 1600 is a 1×N switch having one input and N (N is equal to or more than two) outputs. A WDM optical signal 1610 including plural channels (CH1 to CH7) having different wavelength bands is input to the optical switch 1610. The optical switch 1600 divides the input WDM optical signal into optical signals for the respective channels.

The optical switch 1600 selectively outputs each divided optical signal for each channel to any one of paths 1 to N. Here, the drawing depicts an example where optical signals of CH1 and CH4 are output to the path 1, an optical signal of CH2 is output to the path 2, optical signals of CH3 and CH6 are output to the path 3, and optical signals of CH5 and CH7 are output to the path N.

The optical switch 1600 includes a spectroscopic element that divides the WDM optical signal 1610, and plural movable mirrors that reflect lights at variable angles. The WDM optical signal 1610 input from an input port is divided by the spectroscopic element, and the divided lights are reflected by the movable mirrors aligned in a spectral direction, and angles of the movable mirrors for reflection of the lights are respectively changed, thereby executing port switch control of switching output ports for the respective lights to be output.

Alternatively, the optical switch 1600 can be also used as an N×1 switch having N inputs and one output, or an N×M switch having N inputs and M (M is equal to or more than two) outputs rather than the 1×N switch. To control power of output lights output from the output ports, attenuation control of attenuating the output lights by a desired level by shifting coupling of the lights reflected by the movable mirrors with respect to the output ports is adopted.

However, the conventional technology has a problem in that wavelength components of lights divided by the spectroscopic element partially deviate from the movable mirrors (the wavelength components of the lights are kicked at ends of the movable mirrors) since the movable mirrors are aligned at intervals. When the wavelength components of the lights partially deviate from the movable mirrors, a spread angle of the light reflected by each movable mirror is increased. Therefore, there is a problem in that a band of an output light is narrowed when the attenuation control over the output light is executed.

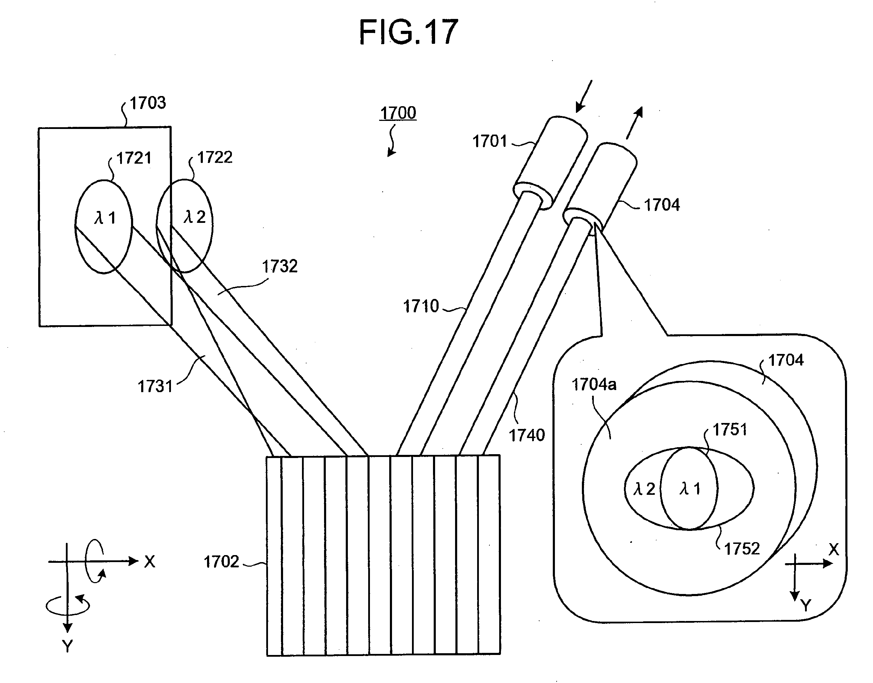

Fig. 17 is a schematic of a principle of an increase in the spread angle of the reflected light. An optical switch 1700 includes an input port 1701, a spectroscopic element 1702, a movable mirror 1703, and an output port 1704. The movable mirror 1703 is one of movable mirrors aligned in a spectral direction of the spectroscopic element 1702. A WDM optical signal 1710 input from the input port 1701 is divided by the spectroscopic element 1702.

This drawing depicts, among the lights divided by the spectroscopic element 1702, only a light of CH1 in a wavelength band where a wavelength λ1 is a central wavelength. The wavelength band of CH1 is assumed to include a wavelength λ2 higher than the wavelength λ1 that is the central wavelength. The movable mirror 1703 reflects the light of CH1 divided by the spectroscopic element 1702.

A light 1721 is a light having a component of the wavelength λ2 in the light of CH1 output from the spectroscopic element 1702 to the movable mirror 1703. A reflected light 1731 is a reflected light that is the light 1721 reflected by the movable mirror 1703. The light 1721 does not deviate from the movable mirror 1703. Therefore, a spread angle of the reflected light 1731 is not substantially increased.

A light 1722 is a light having a component of the wavelength λ2 in the light of CH1 output from the spectroscopic element 1702 to the movable mirror 1703. A reflected light 1732 is a reflected light that is the light 1722 reflected by the movable mirror 1703. A part of the light 1722 deviates from the movable mirror 1703. Therefore, a spread angle of the reflected light 1732 is increased in the spectral direction (an X-axis direction in the drawing) of the spectroscopic element 1702 due to an influence of diffraction.

The movable mirror 1703 can rotate about an axis in the X-axis direction and an axis in a Y-axis direction in the drawing. The movable mirror 1703 slightly rotates about the axis in the X-axis direction to shift angles of the reflected light 1731 and the reflected light 1732 in the Y-axis direction. The movable mirror 1703 slightly rotates about the axis in the Y-axis direction to shift the angles of the reflected lights 1731 and 1732 in the X-axis direction.

A reflected light 1740 is a reflected light obtained by the reflected lights 1731 and 1732 combined by the spectroscopic element 1702. The reflected light 1740 is coupled with a coupling surface 1704a at one end of the output port 1704. The reflected light 1740 coupled with the coupling surface 1704a is output toward the outside from the other end of the output port 1704 as an output light.

A light 1751 is a light having the component of the wavelength λ1 in the reflected light 1740 coupled with the coupling surface 1704a. A light 1752 is a light having the component of the wavelength λ2 in the reflected light 1740 coupled with the coupling surface 1704a. Since a spread angle of the reflected light 1731 is not substantially increased whereas a spread angle of the reflected light 1732 is increased in the X-axis direction, a spot of the light 1752 spreads in the X-axis direction with respect to a spot of the light 1751.

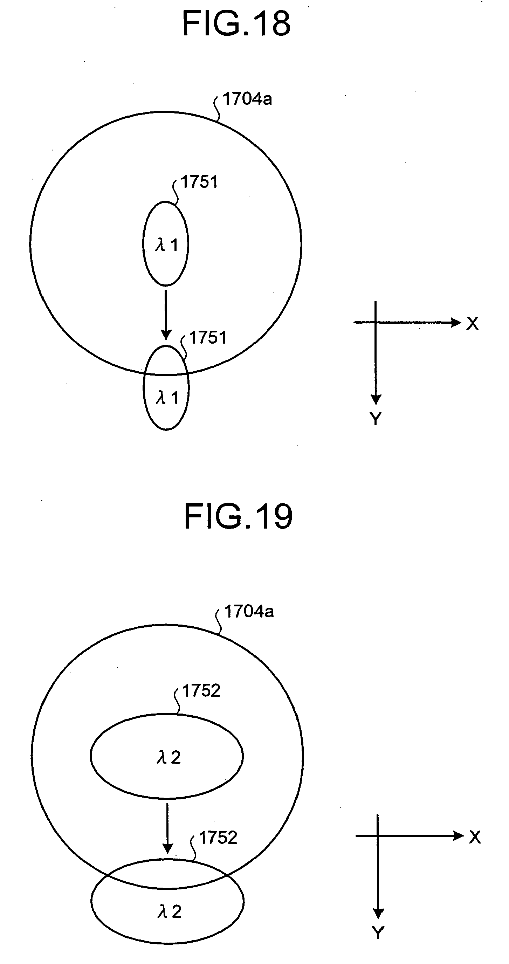

Fig. 18 is a first schematic of coupling of the light having the component of the wavelength λ1 with the coupling surface. Fig. 19 is a first schematic of coupling of the light having the component of the wavelength λ2 with the coupling surface. When the movable mirror 1703 is slightly rotated about the axis in the X-axis direction alone, couplings of the lights 1751 and 1752 with the coupling surface 1704a of the output port 1704 shift in the Y-axis direction.

Since the spot of the light 1751 does not spread in the X-axis direction whereas the spot of the light 1752 spreads in the X-axis direction, slightly rotating the movable mirror 1703 about the axis in the X-axis direction alone causes the light 1752 to deviate from the coupling surface 1704a further than the light 1751. Therefore, the light 1752 is more attenuated than the light 1751.

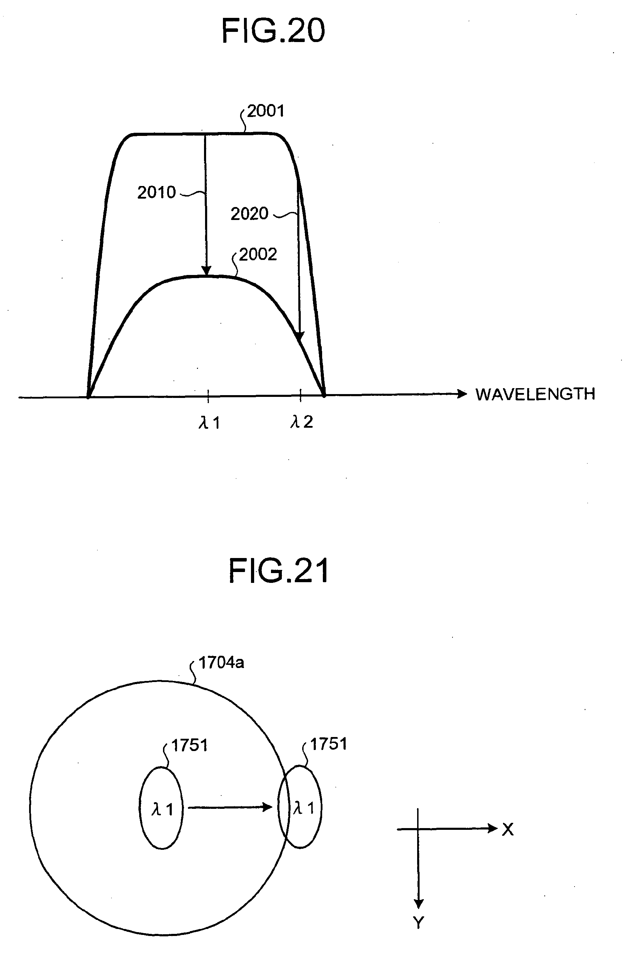

Fig. 20 is a first graph of spectra of an output light from the output port. As shown in Fig. 20, a spectrum 2001 is a spectrum of an output light output from the output port 1704 when the lights 1751 and 1752 are not attenuated. A spectrum 2002 is a spectrum of an output light output from the output port 1704 when the movable mirror 1703 is slightly rotated about the axis in the X-axis direction alone to attenuate the lights 1751 and 1752.

When the movable mirror 1703 is slightly rotated about the axis in the X-axis direction alone, an attenuation level 2020 of the light 1752 having the component of the wavelength λ2 becomes larger than an attenuation level 2010 of the light 1751 having the component of the wavelength λ1. An attenuation level of a light having a component of a wavelength lower than the wavelength λ1 is likewise increased. Therefore, both ends of the spectrum 2002 greatly drop.

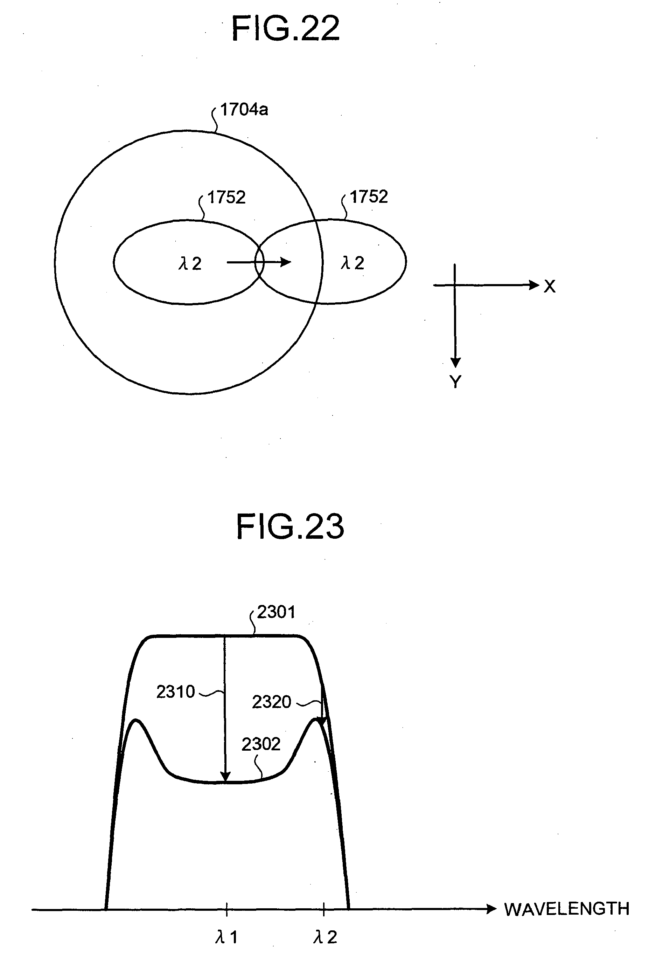

Fig. 21 is a second schematic of coupling of the light having the component of the wavelength λ1 with the coupling surface. Fig. 22 is a second schematic of coupling of the light having the component of the wavelength λ2 with the coupling surface. When the movable mirror 1703 is slightly rotated about the axis in the Y-axis direction alone shown in Fig. 17, couplings of the lights 1751 and 1752 with the coupling surface 1704a of the output port 1704 shift in the X-axis direction as shown in Figs. 21 and 22.

Since the spot of the light 1751 does not spread in the X-axis direction whereas the spot of the light 1752 spreads in the X-axis direction, slightly rotating the movable mirror 1703 about the axis in the Y-axis direction alone causes the light 1752 to less deviate from the coupling surface 1704a than the light 1751. Therefore, the light 1752 is less attenuated than the light 1751.

Fig. 23 is a second graph of spectra of an output light from the output port. As shown in Fig. 23, a spectrum 2301 is a spectrum of an output light output from the output port 1704 when the lights 1751 and 1752 are not attenuated (same as the spectrum 2001 shown in Fig. 20). A spectrum 2302 is a spectrum of an output light output from the output port 1704 when the movable mirror 1703 is slightly rotated about the axis in the Y-axis direction alone to attenuate the lights 1751 and 1752.

When the movable mirror 1703 is slightly rotated about the axis in the Y-axis direction, an attenuation level 2320 of the light 1752 having the component of the wavelength λ2 becomes smaller than an attenuation level 2310 of the light 1751 having the component of the wavelength λ1. An attenuation level of a light having a component of a wavelength lower than the wavelength λ1 is likewise decreased. Therefore, both ends of the spectrum 2302 greatly rise, i.e., a sidelobe occurs.

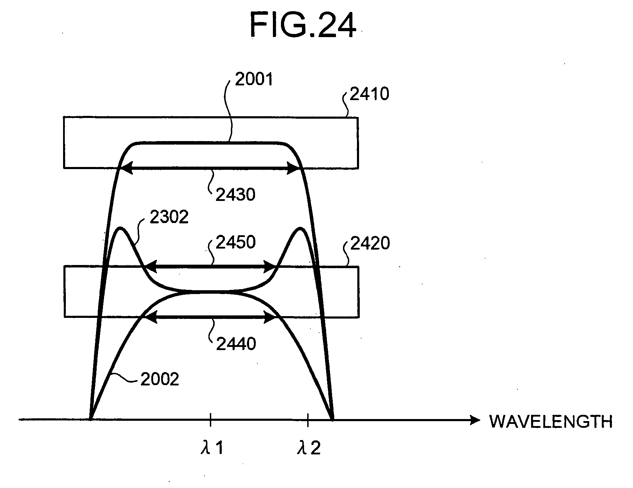

Fig. 24 is a graph of bands of output lights from the output port. As shown in Fig. 24, a range 2410 indicates an allowable range of a power of the output light when the output light is not attenuated. A range 2420 indicates an allowable range of a power of the output light when the output light is attenuated. Each of the ranges 2410 and 2420 is determined based on an allowable sidelobe level of the output light.

A band 2430 is a band of the output light output from the output port 1704 when the movable mirror 1703 is not slightly rotated, and the lights 1751 and 1752 are not attenuated. The band 2430 is a wavelength band included in the range 2410 in the spectrum 2001 shown in Fig. 20 (or the spectrum 2301 shown in Fig. 23).

A band 2440 is a band of the output light output from the output port 1704 when the movable mirror 1703 is slightly rotated about the axis in the X-axis direction alone to attenuate the lights 1751 and 1752. The band 2440 is a wavelength band included in the range 2420 in the spectrum 2002 shown in Fig. 20.

A band 2450 is a band of the output light output from the output port 1704 when the movable mirror 1703 is slightly rotated about the axis in the Y-axis direction alone to attenuate the lights 1751 and 1752. The band 2450 is a wavelength band included in the range 2420 in the spectrum 2302 shown in Fig. 23.

As shown in Fig. 24, since both ends of the spectrum 2002 greatly drop, the band 2440 included in the range 2420 is narrowed. Since both ends of the spectrum 2302 greatly rise and a large sidelobe occurs, the band 2450 included in the range 2420 is narrowed. Thus, when the attenuation control of the output light is executed, the band of the output light is narrowed due to deviation of the light from the movable mirror in the configuration where the movable mirror 1703 is slightly rotated about one of the axis in the X-axis direction and the axis in the Y-axis direction.

Narrowing intervals between the movable mirrors to reduce deviation of the light from the movable mirrors can be also considered. However, the method has a problem in that fine processing of the movable mirrors is difficult, or a problem in that interference noise of the movable mirrors is increased. Processing the movable mirrors to partially adjust reflectivities of the movable mirrors and to correct a spectrum of an output light can be also considered. However, the method has a problem in that fine processing of the movable mirrors is difficult, or a problem in that the movable mirrors must be replaced since optimal reflectivities vary every time an attenuation level is adjusted.

SUMMARY OF THE INVENTION

It is an object of the present invention to at least solve the above problems in the conventional technologies.

An optical switch according to one aspect of the present invention includes plural ports aligned; a spectroscopic element that divides a light input to one of the ports that is an input port; plural mirrors (140) that are aligned in a spectral direction of the light divided, and reflect the light divided; and a control unit (150) that changes an angle of each of the mirrors so that the light reflected is output to one of the ports that is an output port, and shifts the angle in the spectral direction and a direction perpendicular to the spectral direction to attenuate the light output from the output port.

A method according to another aspect of the present invention is of controlling an optical switch that includes plural ports aligned; a spectroscopic element that divides a light input to one of the ports that is an input port; plural mirrors that are aligned in a spectral direction of the light divided, and reflect the light divided. The method includes switching an output port that is one of the ports and to which the light reflected is output by changing an angle of each of the mirrors; and attenuating the light output from the output port by shifting the angle in the spectral direction and a direction perpendicular to the spectral direction.

An optical switch according to still another aspect of the present invention includes plural ports aligned; a spectroscopic element that divides a light input to one of the ports that is an input port; plural mirrors (140) that reflect the light divided to be output to at least one of the ports that is an output port; and a control unit (150) that shifts an angle of at least one of the mirrors in a spectral direction of the light divided, and a direction perpendicular to the spectral direction to attenuate the light output from the output port.

The other objects, features, and advantages of the present invention are specifically set forth in or will become apparent from the following detailed description of the invention when read in conjunction with the accompanying drawings.

BRIEF DESCRIPTION OF THE DRAWINGS

Fig. 1 is a perspective view of a configuration of an optical switch according to an embodiment;
Fig. 2 is a first schematic of port switch control of the optical switch;
Fig. 3 is a second schematic of the port switch control of the optical switch;
Fig. 4 is a first schematic of attenuation control executed by the optical switch;
Fig. 5 is a second schematic of the attenuation control executed by the optical switch;
Fig. 6 is a schematic of spectra of an output light of the optical switch;
Fig. 7 is a graph of a relationship between a direction for shifting coupling of the light and a spectrum of the output light;
Fig. 8 is a block diagram of a part of a configuration example of the optical switch;
Fig. 9 is a flowchart of an example of a preparatory operation of the optical switch;
Fig. 10 is a graph of combinations of attenuation set values maximizing a band of an output light;
Fig. 11 is a schematic of an example of information concerning combinations of attenuation control values stored in a memory;
Fig. 12 is a flowchart of an example of attenuation control executed by the optical switch;
Fig. 13 is a block diagram of a part of another configuration example of the optical switch;

Fig. 14 is a flowchart of an example of automatic setting control executed by the optical switch;

Fig. 15 is a graph of a relationship between an attenuation control value X and a band of the output light;

Fig. 16 is a schematic of a conventional optical switch;

Fig. 17 is a schematic of a principle of an increase in a spread angle of a reflected light;

Fig. 18 is a first schematic of coupling of a light having a component of a wavelength λ1 with a coupling surface;

Fig. 19 is a first schematic of coupling of a light having a component of a wavelength λ2 with the coupling surface;

Fig. 20 is a first graph of spectra of an output light from an output port;

Fig. 21 is a second schematic of coupling of the light having the component of the wavelength λ1 with the coupling surface;

Fig. 22 is a second schematic of coupling of the light having the component of the wavelength λ2 with the coupling surface;

Fig. 23 is a second graph of spectra of an output light from the output port; and

Fig. 24 is a graph of bands of output lights from the output port.

## DETAILED DESCRIPTION OF THE PREFERRED EMBODIMENTS

Referring to the accompanying drawings, exemplary embodiments according to the present invention are explained in detail below.

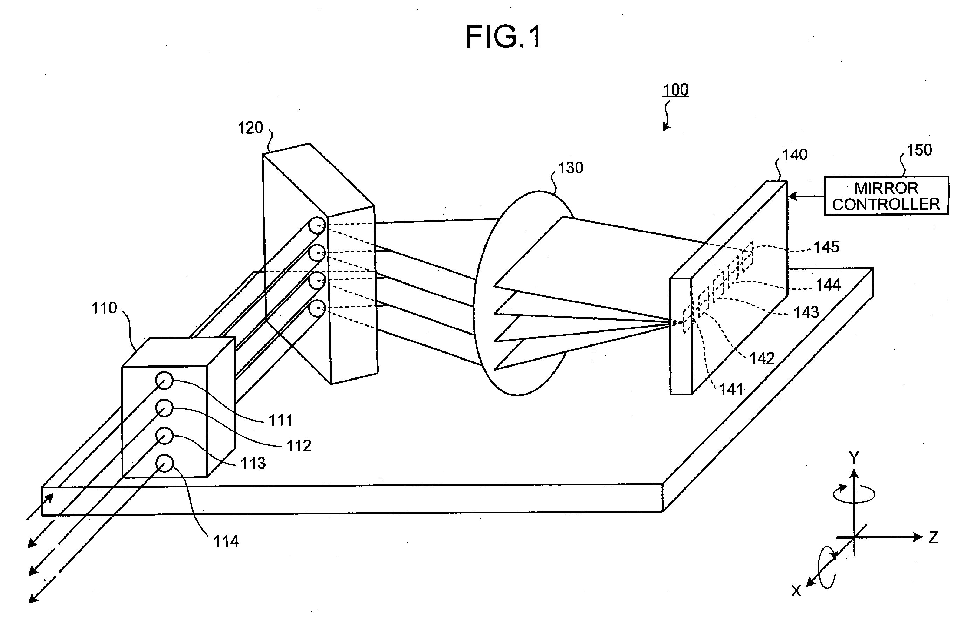

Fig. 1 is a perspective view of a configuration of an optical switch according to an embodiment. As shown in Fig. 1, an optical switch 100 according to the embodiment includes a port array 110, a spectroscopic element 120, a condensing optical system 130, a movable mirror array 140, and a mirror controller 150.

Here, a case where the optical switch 100 is used as an optical switch having one input and plural outputs that outputs a light input from one port to any one of plural other ports is explained. The port array 110 has a configuration where plural input/output ports 111 to 114 are aligned in an array. The input/output ports 111 to 114 are aligned in a Y-axis direction in the drawing.

The input/output ports 111 to 114 are used as an input port or output ports, respectively. Here, the input/output port 111 is used as the input port ("input/output port 111" is referred to as "input port 111" hereinafter). The input port 111 allows an externally input light to transmit therethrough to the spectroscopic element 120.

The light input to the input port 111 is a light including components of plural different wavelength bands, i.e., a WDM optical signal including channels of plural different wavelength bands. The input/output ports 112 to 114 are used as the output ports ("input/output ports 112 to 114" is referred to as "output ports 112 to 114" hereinafter, respectively). The output ports 112 to 114 output lights exiting the spectroscopic element 120 toward the outside.

The spectroscopic element 120 divides the light exiting the input port 111 according to each wavelength component, and allows the divided lights to exit toward the condensing optical system 130. The spectroscopic element 120 divides the light in a direction different from an alignment direction of the input/output ports 111 to 114. Here, the spectral direction of the spectroscopic element 120 is a direction (X-axis direction) perpendicular to the alignment direction of the input/output ports 111 to 114.

The spectroscopic element 120 allows the lights exiting the condensing optical system 130 to exit toward corresponding output ports 112 to 114. At this time, the spectroscopic element 120 allows the lights exiting the condensing optical system 130 to be output to the output ports corresponding to positions of the lights in the Y-axis direction among the output ports 112 to 114. The spectroscopic element 120 is, for example, a diffraction grating.

The condensing optical system 130 collimates the lights output from the spectroscopic element 120 in the X-axis direction, condenses these lights in the Y-axis direction, and outputs the condensed lights to the movable mirror array 140. The condensing optical system 130 condenses the lights reflected by the movable mirror array 140 in the X-axis direction in the drawing, collimates the condensed lights in the-Y axis direction, and outputs the collimated lights to the spectroscopic element 120. The condensing optical system 130 includes one convex lens in the example.

The movable mirror array 140 includes plural movable mirrors 141 to 145 that are aligned in an array. The movable mirrors 141 to 145 are aligned in the spectral direction (X-axis direction) of the lights divided by the spectroscopic element 120. The movable mirrors 141 to 145 reflect, at changeable angles, the lights divided by the spectroscopic element 120 and transmitted through the condensing optical system 130. The movable mirrors 141 to 145 are, for example, five micro electro mechanical systems (MEMS) mirrors provided in an array.

The movable mirrors 141 to 145 are aligned at fixed intervals. The respective lights having different wavelength components divided by the spectroscopic element 120 are output to the different movable mirrors to be reflected. The wavelength components of the lights respectively striking on the movable mirrors 141 to 145 can be arbitrarily set by changing of a distance between the spectroscopic element 120 and the condensing optical system 130 to adjust spectral ranges of the lights or by adjusting of the intervals between the movable mirrors 141 to 145.

Each of the movable mirrors 141 to 145 rotates about two axes, i.e., an axis in the Y-axis direction (first rotating axis) and an axis in the X-axis direction (second rotating axis) in the drawing, and reflects the light transmitted through the condensing optical system 130 at an angle according to a rotation angle. The light reflected by each of the movable mirrors 141 to 145 is coupled with any one of the output ports 112 to 114 through the condensing optical system 130 and the spectroscopic element 120.

The mirror controller 150 executes port switch control (switch step) of individually changing angles of the movable mirrors 141 to 145 to switch one of the output ports 112 to 114 coupled with each reflected light from the movable mirrors 141 to 145. The mirror controller 150 also executes attenuation control (attenuation step) of individually shifting the angles of the movable mirrors 141 to 145 to attenuate each reflected light that is coupled with each of the output ports 112 to 114 to be output to the outside.

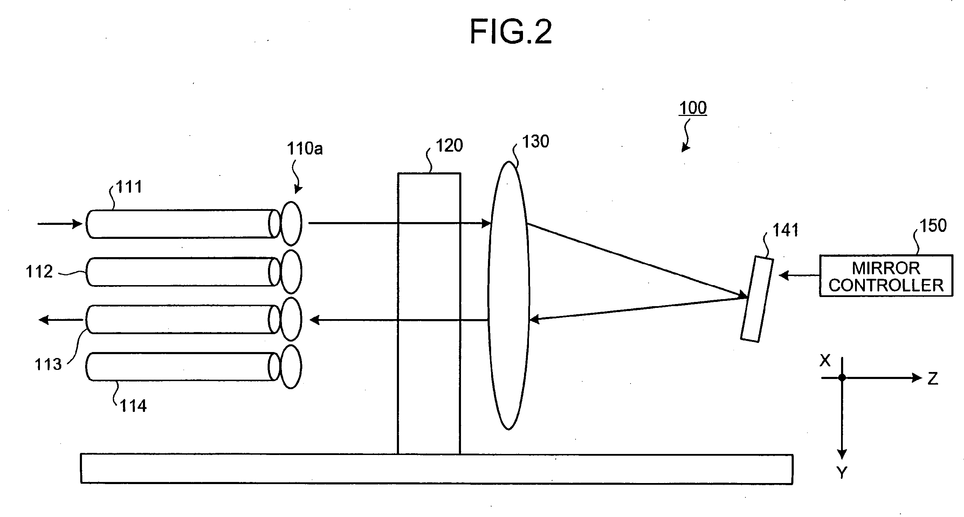

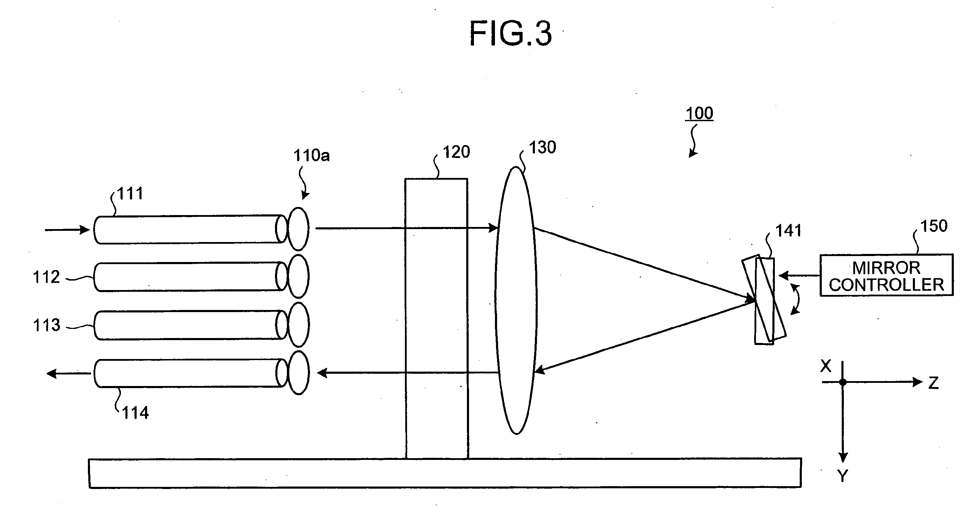

Fig. 2 is a first schematic of the port switch control of the optical switch. Fig. 3 is a second schematic of the port switch control of the optical switch. Each of Figs. 2 and 3 depicts the configuration of the optical switch 100 shown in Fig. 1 in a simulative manner, and like reference numerals denote like elements shown in Fig. 1.

In Figs. 2 and 3, the X-axis direction in the drawings matches the spectral direction of the lights divided by the spectroscopic element 120 in a similar manner as Fig. 1. The Y-axis direction matches the alignment direction of the input/output ports 111 to 114 (this can be similarly applied to the other drawings). A Z-axis direction is a direction perpendicular to the X-axis and the Y-axis. Here, only the movable mirror 141 of the movable mirrors 141 to 145 in the movable mirror array 140 is shown.

Reference numeral 110a denotes four collimation lenses provided at one end of each of the input/output ports 111 to 114 on the spectroscopic element 120 side. The four collimation lenses 110a collimate the respective lights exiting the input/output ports 111 to 114, output the collimated lights to the spectroscopic element 120, condense the respective lights output from the spectroscopic element 120, and couple the condensed lights with the input/output ports 111 to 114.

As shown in Fig. 2, the movable mirror 141 reflects the light externally input to the input port 111 at a given angle under the control of the mirror controller 150. At this time, the reflected light reflected by the movable mirror 141 is coupled with one end of the output port 113 through the condensing optical system 130 and the spectroscopic element 120. In this case, the light coupled with the one end of the output port 113 is output outward from the other end of the output port 113.

As shown in Fig. 3, the movable mirror 141 changes the angle for reflecting the light externally input to the input port 111 under the control of the mirror controller 150. At this time, the reflected light reflected by the movable mirror 141 is coupled with one end of the output port 114 through the condensing optical system 130 and the spectroscopic element 120. In this case, the light coupled with the one end of the output port 114 is output outward from the other end of the output port 114.

Thus, the mirror controller 150 switches the output port to be coupled with the reflected light from the movable mirror 141 among the input/output ports 111 to 114 by rotating the movable mirror 141 about the axis in the X-axis direction. Likewise, the mirror controller 150 individually switches the output port to be coupled with each reflected light from the movable mirrors 142 to 145 by rotating the movable mirrors 142 to 145 about the axis in the X-axis direction.

The mirror controller 150 may execute port switch control of changing the angle of the movable mirror 141 in the Y-axis direction by rotating the movable mirror 141 about the axis in the X-axis direction while diverting the reflected light from the movable mirror 141 in the X-axis direction by rotating the movable mirror 141 about the axis in the Y-axis direction.

For example, the mirror controller 150 changes an angle of the reflected light from the movable mirror 141 in the X-axis direction, then changes the angle in the Y-axis direction, and restores the angle by a degree corresponding to the change in the X-axis direction after the changing in the Y-axis direction. Here, the degree of changing the angle of the reflected light from the movable mirror 141 in the X-axis direction is a degree by which the reflected light is sufficiently deviated from the movable mirror 141 from the alignment of the input/output ports 111 to 114. As a result, the reflected light from the movable mirror 141 can be prevented from being coupled with an unintended output port during the port switch control.

A light that is in lights externally input to the input port 111, reflected by the movable mirror 141, and output outward from the output port 114 is explained hereinafter. The mirror controller 150 slightly changes an angle of the movable mirror 141 for reflecting the light to attenuate a reflected light that is coupled with the output port 114 and output outward as an output light.

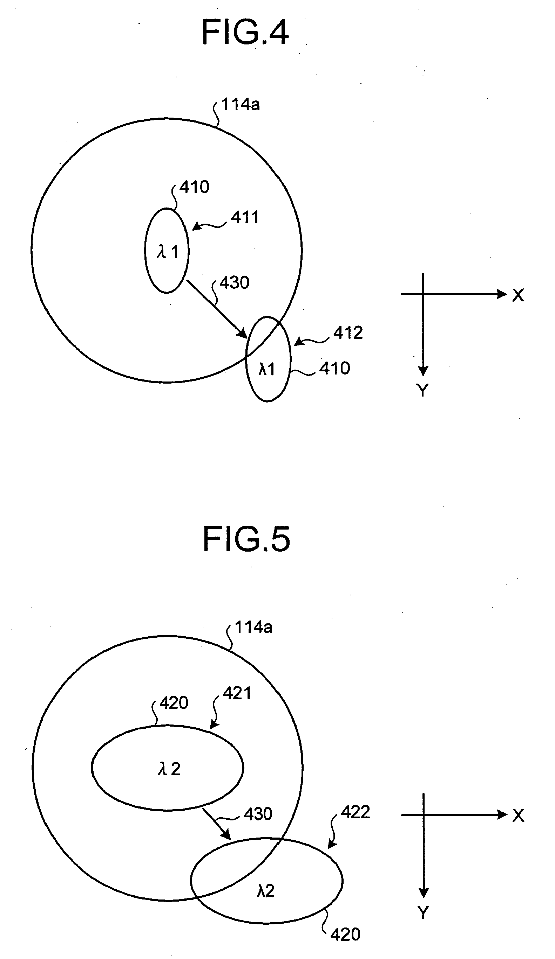

Fig. 4 is a first schematic of attenuation control executed by the optical switch. Fig. 5 is a second schematic of the attenuation control executed by the optical switch. Reference numeral 114a denotes a coupling surface of an end portion of the output port 114 shown in Fig. 3 on the spectroscopic element 120 side. A light 410 shown in Fig. 4 is a light having a component of the wavelength $\lambda 1$ in a reflected light that is reflected by the movable mirror 141 and then coupled with the coupling surface 114a of the output port 114.

A light 420 shown in Fig. 5 is a light having a component of the wavelength $\lambda 2$ in a reflected light that is reflected by the movable mirror 141 and then coupled with the coupling surface 114a of the output port 114. The mirror controller 150 executes the port switch control, and allows the lights 410 and 420 to partially deviate from the coupling surface 114a to attenuate an output light output from the output port 114 to the outside.

Reference numerals 411 and 421 denote states where the lights 410 and 420 are completely coupled with the output port 114 without deviating from the coupling surface 114a. Reference numerals 412 and 422 denote states where the lights 410 and 420 partially deviate from the coupling surface 114a and the lights 410 and 420 are only partially coupled with the port 114.

Specifically, the mirror controller 150 shifts an angle of the movable mirror 141 for reflecting the light in the spectral direction and the direction perpendicular to the spectral direction. Shifting the angle for reflection in the spectral direction and the direction perpendicular to the spectral direction indicates shifting the angle for reflection in a combined direction 430 of the spectral direction (X-axis direction) and the direction perpendicular to the spectral direction (Y-axis direction).

Shifting the angle of the movable mirror 141 for reflecting the light indicates slightly changing the angle of the movable mirror 141 for reflecting the light so that the lights 410 and 420 only partially deviate from the coupling surface 114a as indicated by the reference numerals 412 and 422. As a result, coupling of the reflected light with respect to the coupling surface 114a of the output port 114 can be shifted.

Here, the mirror controller 150 slightly rotates the movable mirror 141 about the axis in the X-axis direction and also around the axis in the Y-axis direction to shift the angle of the movable mirror 141 for reflecting the light in the X-axis direction and the Y-axis direction. The combined direction 430 is determined based on a ratio of a degree by which the movable mirror 141 is slightly rotated about the axis in the X-axis direction and a degree by which the movable mirror 141 is slightly rotated about the axis in the Y-axis direction.

As a result, a coupling rate of the reflected light with respect to the coupling surface 114a is lowered, thereby attenuating the output light output from the output port 114 to the outside. An attenuation level of the output light output from the output port 114 to the outside can be adjusted by changing a degree by which the angle of the movable mirror 141 for reflecting the light is shifted and by varying degrees by which the lights 410 and 420 are deviated from the coupling surface 114a.

Here, since the input/output ports 111 to 114 are aligned in the direction perpendicular to the spectral direction of the spectroscopic element 120, the direction perpendicular to the spectral direction matches the alignment direction of the input/output ports 111 to 114. Therefore, as a mechanism that shifts the angle of the movable mirror 141 for reflecting the light in the direction perpendicular to the spectral direction, a mechanism that changes the angle of the movable mirror 141 for reflecting the light in the port switch control can be used as it is.

In the port switch control, the output port to be coupled with the reflected light may be switched by changing of the angle of the movable mirror 141 for reflecting the light in the X-axis direction and then in the Y-axis direction, and returning of the angle in the X-axis direction. In this case, as a mechanism that shifts the angle of the movable mirror 141 for reflecting the light in the spectral direction, a mechanism that changes the angle of the movable mirror 141 for reflecting the light in the X-axis direction in the port switch control can be used as it is.

Although a case where the two axes each serving as the center of rotation of the movable mirror 141 are the axis in the X-axis direction and the axis in the Y-axis direction is explained here, the two axes each serving as the center of rotation of the movable mirror 141 are not limited to these directions. The two axes each serving as the center of rotation of the movable mirror 141 may be at least two axes in different directions on an XY plane in the drawing. As a result, the angle for reflection can be shifted in the combined direction 430 of the X-axis direction and the Y-axis direction according to a slight rotation degree about each of the two axes.

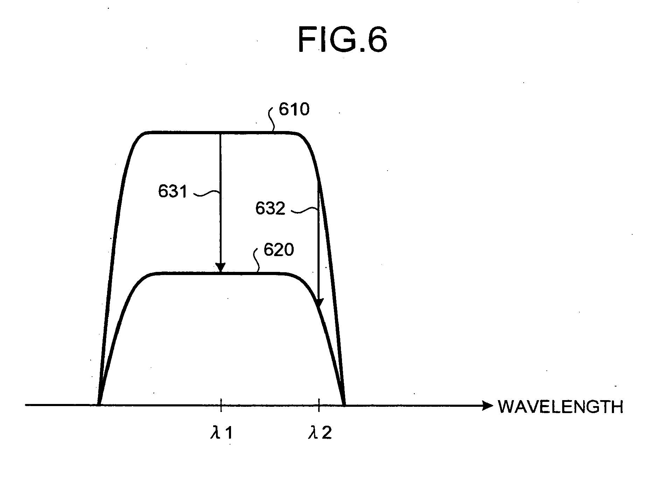

Fig. 6 is a schematic of spectra of an output light of the optical switch. Fig. 6 depicts spectra of the output light output to the outside from the output port 114. A spectrum 610 represents a light that is output from the output port 114 when coupling of the reflected light with respect to the coupling surface 114a is not shifted. A spectrum 620 represents an output light that is output from the output port 114 when coupling of the reflected light with respect to the coupling surface 114a is shifted.

Shifting coupling of the reflected light with respect to the coupling surface 114a causes attenuating a power of the light output from the output port 114 as indicated by the spectrum 620. When a degree by which coupling of the reflected light with the output port 114 is shifted in the X-axis direction is increased with respect to a degree by which the coupling is shifted in the Y-axis direction, a sidelobe of the spectrum 620 rises.

On the contrary, when the degree by which coupling of the reflected light with the output port 114 is shifted in the X-axis direction is reduced with respect to the degree by which the coupling is shifted in the Y-axis direction, a power at both ends (parts each corresponding to the sidelobe) of the spectrum 620 is lowered. Therefore, the sidelobe of the spectrum 620 can be adjusted based on a combination of the degree by which coupling of the reflected light with the output port 114 is shifted in the X-axis direction and the degree by which the coupling is shifted in the Y-axis direction. As a result, an attenuation level 631 of the light 410 can approximate an attenuation level 632 of the light 420, thus expanding a flat band of the output light.

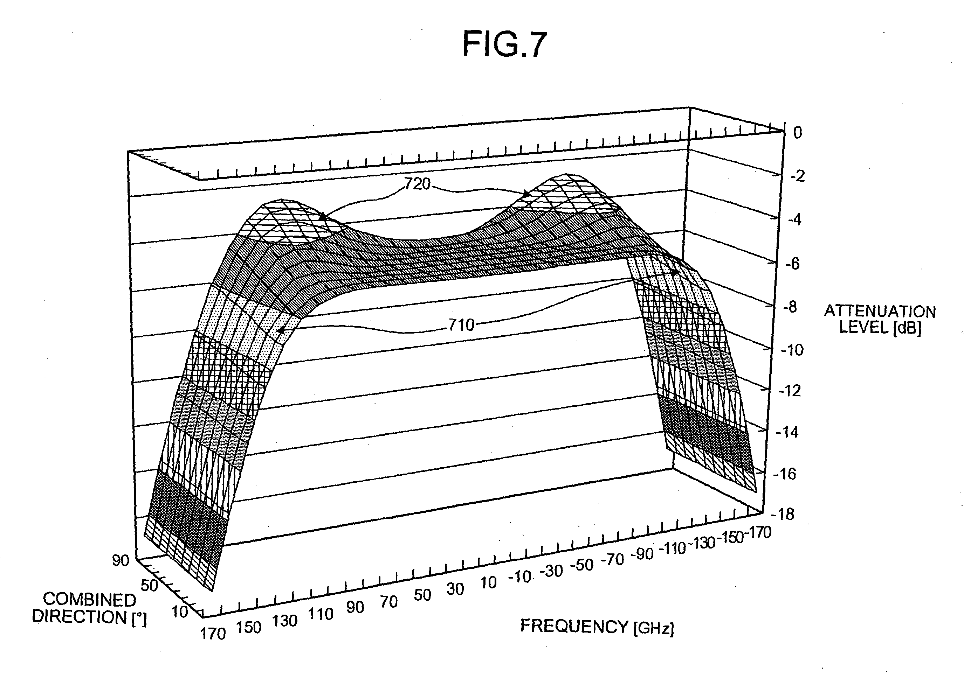

Fig. 7 is a graph of a relationship between a direction for shifting coupling of the light and a spectrum of the output light. As shown in Fig. 7, an ordinate represents the combined direction 430[°] (see Figs. 4 and 5) for shifting coupling of the light with the coupling surface 114a when the Y-axis direction is 0° and the X-axis direction is 90°. An abscissa and a height axis represent a spectrum of the output light output from the output port 114. The abscissa represents a frequency [GHz] of the light output from the output port 114. The height axis represents an attenuation level [dB] of the light output from the output port 114.

When the combined direction 430 is 0°, i.e., when the angle of the movable mirror 141 for reflecting the light is shifted in the Y-axis direction alone, the attenuation level at both ends of the spectrum (parts each corresponding to the side lobe) is increased as indicated by reference numeral 710. When the combined direction 430 is 90°, i.e., when the angle of the movable mirror 141 for reflecting the light is shifted in the X-axis direction alone, the sidelobe of the spectrum is increased as indicted by reference numeral 720.

According to the present invention, the angle of the movable mirror 141 for reflecting the light is shifted in both the X axis direction and the Y axis direction. For example, when the combined direction 430 is approximately 45°, i.e., when the angle of the movable mirror 141 for reflecting the light is shifted in both the X-axis direction and the Y-axis direction by the same degree, no excessive attenuation occurs at both ends of the spectrum and no large sidelobe is produced either. Therefore, a frequency band serving as an allowable attenuation level can be expanded.

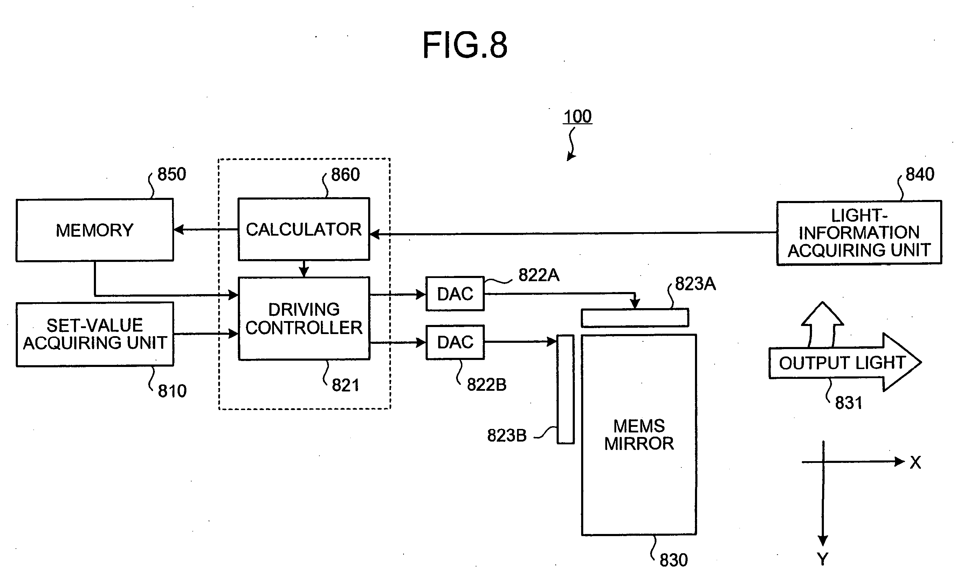

Fig. 8 is a block diagram of a part of a configuration example of the optical switch. As shown in Fig. 8, the optical switch 100 includes a set-value acquiring unit 810, a driving controller 821, a digital to analog converter (DAC) 822A, a DAC 822B, a driver 823A, a driver 823B, an MEMS mirror 830, a light-information acquiring unit 840, a memory 850, and a calculator 860.

Here, the port array 110, the spectroscopic element 120, and the condensing optical system 130 in the optical switch 100 shown in Fig. 1 are omitted in the drawing. With regard to the movable mirror array 140 shown in Fig. 1, only the MEMS mirror 830 corresponding to the movable mirror 141 of the movable mirrors 141 to 145 is depicted.

The mirror controller 150 in the optical switch 100 shown in Fig. 1 includes the driving controller 821, the DAC 822A, the DAC 822B, the driver 823A, and the driver 823B. The movable mirror 141 in the optical switch 100 includes the MEMS mirror 830. Although not shown, each of the movable mirrors 142 to 145 likewise includes the same MEMS mirror as the MEMS mirror 830.

The set-value acquiring unit 810 acquires port switch information from the outside. The set-value acquiring unit 810 outputs the acquired port switch information to the driving controller 821. The port switch information is information indicative of any one of the output ports 112 to 114 that each reflected light from the movable mirrors 141 to 145 should be output therefrom. For example, the port switch information is information indicating that the reflected light from the movable mirror 141 should be output from the output port 114.

The set-value acquiring unit 810 also acquires attenuation set-value information from the outside. The set-value acquiring unit 810 outputs the acquired attenuation set value to the driving controller 821. The attenuation set-value information is information indicative of an attenuation level set in the optical switch 100. For example, the attenuation set-value information is information indicating that the reflected light from the movable mirror 141 should be attenuated by 2 dB to be output or information indicating that the reflected light from the movable mirror 141 should be attenuated by 4 dB to be output.

The driving controller 821 sets a port switch control value Y required to change an angle of the MEMS mirror 830 for reflecting a light in the Y-axis direction based on the port switch information output from the set-value acquiring unit 810. The driving controller 821 also sets an attenuation control value X required to shift an angle of the MEMS mirror 830 for reflecting the light in the X-axis direction and an attenuation control value Y required to shift the angle in the Y-axis direction based on the attenuation set-value information output from the set-value acquiring unit 810.

The driving controller 821 outputs information concerning the set port-switch control value Y as a control value Y to the DAC 822B to execute port switch control (switch step), and then outputs information concerning the attenuation control value X as a control value X to the DAC 822A and also outputs information concerning the attenuation control value Y as a control value Y to the DAC 822B to perform attenuation control (attenuation step).

Alternatively, the driving controller 821 may output information concerning the attenuation control value X as a control value X to the DAC 822A, and also output information concerning a combination of the port switch control value Y and the attenuation control value Y as a control value Y to the DAC 822B to simultaneously execute the port switch control and the attenuation control. The information concerning a combination of the port switch control value Y and the attenuation control value Y is information indicative of a degree obtained by combining a degree of changing the angle of the MEMS mirror 830 for reflecting the light in the Y-axis direction for port switching and a degree of shifting the angle in the Y-axis direction for attenuation control.

The DAC 822A converts the information concerning the control value X output from the driving controller 821 into an analog value. The DAC 822A outputs the control value X subjected to analog conversion to the driver 823A. The DAC 822B converts the information concerning the control value Y output from the driving controller 821 into an analog value. The DAC 822B outputs the information concerning the control value Y subjected to analog conversion to the driver 823B.

The driver 823A rotates the MEMS mirror 830 about the axis in the Y-axis direction by a degree corresponding to the information concerning the control value X output from the DAC 822A. As a result, the angle of the MEMS mirror 830 for reflecting the light is changed in the spectral direction (X-axis direction) of the spectroscopic element 120. The driver 823B rotates the MEMS mirror 830 about the axis in the X-axis direction by a degree corresponding to the information concerning the control value Y output from the DAC 822B. As a result, the angle of the MEMS mirror 830 for reflecting the light is changed in the alignment direction (Y-axis direction) of the ports.

An output light 831 is a reflected light that is reflected by the MEMS mirror 830 and output to the outside from the output port 114. The light-information acquiring unit 840 acquires information concerning an attenuation level of the output light 831 and information concerning a band of the output light 831. The light-information acquiring unit 840 outputs the acquired information concerning the output light 831 to the calculator 860. When the optical switch 100 does not execute a later-explained preparatory operation, the light-information acquiring unit 840 may not acquire the information concerning the band of the output light 831.

The light-information acquiring unit 840 is provided at, e.g., an end portion of the output port 114 on the output side, and monitors the output light 831 output from the output port 114 to acquire information concerning the output light 831. In this case, the light-information acquiring unit 840 includes a power monitor and a spectrum analyzer provided at, e.g., the end portion of the output port 114 on the output side.

Alternatively, the light-information acquiring unit 840 may receive the information concerning the output light 831 from another communication device that receives the output light 831 output from the output port 114 to acquire the information concerning the output light 831. In this case, the light-information acquiring unit 840 includes, e.g., a receiving device that receives an optical signal including the information concerning the output light 831 transmitted from the other communication device.

The memory 850 is a storage unit that previously stores information concerning a combination of an attenuation control value X and an attenuation control value Y maximizing a band of the output light 831 output from the output port 114 before the port switch control and the attenuation control. The driving controller 821 reads the information concerning the combination of the attenuation control value X and the attenuation control value Y stored in the memory 850, and sets the attenuation control value X and the attenuation control value Y based on the read information.

The memory 850 may store information concerning combinations of the attenuation control value X and the attenuation control value Y maximizing a band of the output light 831 output from the output port 114 that are associated with respective attenuation set values. In this case, the driving controller 821 reads information concerning a combination associated with an attenuation set value indicated by information output from the set-value acquiring unit 810 in the information concerning combinations of the attenuation control value X and the attenuation control value Y stored in the memory 850, and sets the attenuation control value X and the attenuation control value Y based on the read information.

Here, the optical switch 100 may perform a preparatory operation of acquiring the information concerning a combination of the attenuation control value X and the attenuation control value Y maximizing a band of the output light 831 output from the output port 114 and storing the acquired information in the memory 850 before the port switch control and the attenuation control. In this case, the calculator 860 that calculates the combination maximizing the band of the output light 831 while changing an angle of the MEMS mirror 830 for reflecting the light is provided.

Specifically, the calculator 860 controls the driving controller 821 to change a combination of the attenuation control value X and the attenuation control value Y. The calculator 860 changes the combination of the attenuation control value X and the attenuation control value Y, and acquires information concerning a band of the output light 831 output from the light-information acquiring unit 840 while changing an angel of the MEMS mirror 830 so that an attenuation level of the output light 831 becomes the attenuation set value.

The calculator 860 calculates a combination of the attenuation control value X and the attenuation control value Y maximizing the band of the output light 831 based on the acquired information concerning the band of the output light 831. The calculator 860 stores the information concerning the calculated combination in the memory 850. The calculator 860 may also calculate a combination of the attenuation control value X and the attenuation control value Y maximizing the band of the output light for each attenuation set value. The driving controller 821 and the calculator 860 (region indicated by a dotted line in the drawing) includes, e.g., a central processing unit (CPU).

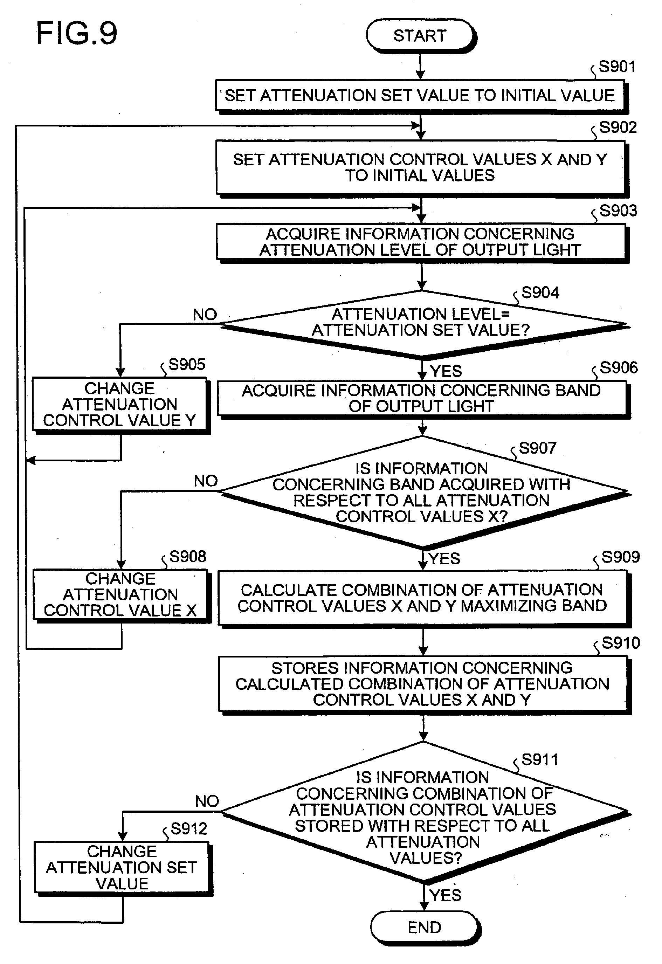

Fig. 9 is a flowchart of an example of a preparatory operation of the optical switch. As shown in Fig. 9, the driving controller 821 first sets the attenuation set value to an initial value (e.g., attenuation of 2 dB) (step S901). Then, the driving controller 821 sets the attenuation control values X and Y to initial values (e.g., both 0) (step S902). The light-information acquiring unit 840 subsequently acquires information concerning an attenuation level of the output light 831 (step S903).

The driving controller 821 then determines whether the attenuation level indicated by the information acquired at the step S903 is the attenuation set value (step S904). If the attenuation level is not the attenuation set value (step S904: NO), the driving controller 821 changes the attenuation control value Y (step S905), and the process returns to the step S903 to continue the processing. If the attenuation level is the attenuation set value (step S904: YES), the light-information acquiring unit 840 acquires information concerning a band of the output light 831 (step S906).

Whether the information concerning the band of the output light 831 is acquired with respect to all the attenuation control values X is determined (step S907). If the information concerning the band of the output light 831 is not acquired with respect to all the attenuation control values X (step S907: NO), the driving controller 821 changes the attenuation control value X (step S908), and the process returns to step S903 to continue the processing.

If the information concerning the band of the output light 831 is acquired with respect to all the attenuation control values X at step S907 (step S907: YES), the calculator 860 calculates a combination of the attenuation control values X and Y maximizing the band of the output light 831 based on the information concerning the band acquired at step S906 (step S909).

The calculator 860 then stores information concerning the combination of the attenuation control values X and Y calculated at step S909 in the memory 850 (step S910). Whether the calculator 860 stores information concerning the combination of the attenuation control values X and Y with respect to all attenuation set values in the memory 850 is determined (step S911).

If the information concerning the combination of the attenuation control values X and Y with respect to all the attenuation set values is not stored in the memory 850 at the step S911 (step S911: NO), the calculator 860 changes the attenuation set value (step S912), and the process returns to step S902 to continue the processing. If the information concerning the combination of the attenuation control values X and Y with respect to all the attenuation set values is stored in the memory 850 (step S911: YES), a series of processing ends.

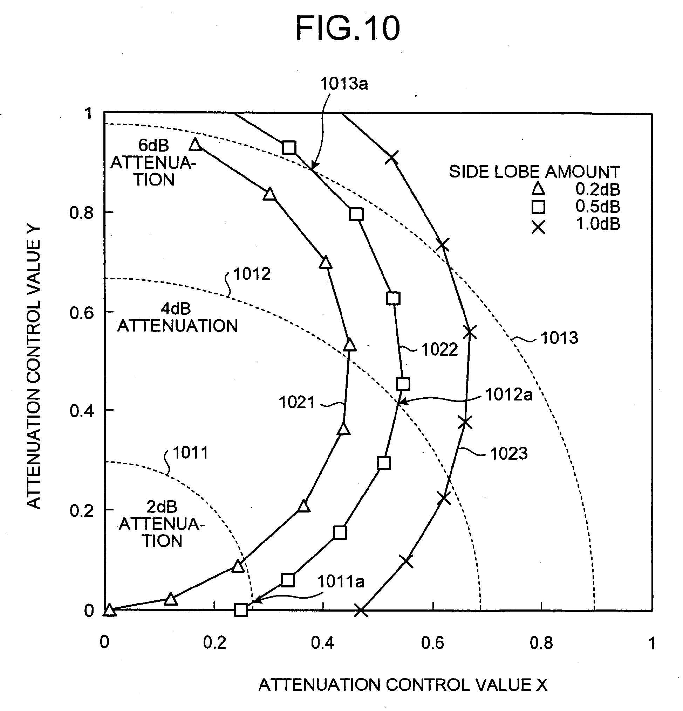

Fig. 10 is a graph of combinations of the attenuation set values maximizing the band of the output light. As shown in Fig. 10, an abscissa represents the attenuation control value X set by the driving controller 821. An ordinate represents the attenuation control value Y set by the driving controller 821. Each of reference numerals 1011, 1012, 1013 denotes a relationship between the attenuation control values X and Y by which an attenuation level of the output light 831 become 2 dB, 4 dB, or 6 dB.

Each of reference numerals 1021, 1022, and 1023 represents a relationship between the attenuation control values X and Y maximizing a band of the output light 831 when an allowed sidelobe is 0.2 dB, 0.5 dB, or 1.0 dB. At step S901 shown in Fig. 9, an initial value of the attenuation set value is set to 2 dB. An allowed sidelobe level is set to 0.5 dB.

In this case, at steps S902 to S908, information concerning the relationship 1011 between the attenuation control values X and Y by which the attenuation level of the output light 831 become 2 dB can be obtained. At step S909, in the relationship 1011 between the attenuation control values X and Y, a combination 1011a of the attenuation control values X and Y maximizing the band of the output light 831 can be calculated.

At steps S911 and S912, by changing the attenuation set value and repeating the steps, the relationships 1012 and 1013 between the attenuation control values X and Y can be acquired and combinations 1012a and 1013a of the attenuation control values X and Y maximizing the band of the output light 831 can be calculated when the attenuation set value is 4 dB and 6 dB.

When the attenuation set value is finely changed to set many types of attenuation set values at steps S911 and S912, detailed information concerning the relationship 1022 between the attenuation control values X and Y maximizing the band of the output light 831 can be obtained. As a result, even if the attenuation set value is finely changed, the attenuation control values X and Y maximizing the band of the output light 831 can be constantly set.

Changing a magnitude of the allowed sidelobe to 0.2 dB and 1.0 dB to execute the respective steps depicted in Fig. 9 enables obtaining information concerning the relationships 1021 and 1023 between the attenuation control values X and Y maximizing the band of the output light 831 when the allowed sidelobe is 0.2 dB and 1.0 dB.

The graph in Fig. 10 depicts a result of a simulation executed with assumption of the optical switch 100. A computational expression of the attenuation control values X and Y for obtaining the simulation result shown in Fig. 10 is explained hereinafter. Assuming that a spot size of a light reflected by the MEMS mirror 830 in the X-axis direction is BWX, a coupling rate $\kappa$ of the reflected light from the MEMS mirror 830 with respect to the coupling surface 114a can be represented by the following Expression (1).

$$\kappa = \frac{4}{\left( \dfrac{BWX \cdot R(p)}{BWX} + \dfrac{BWX}{BWX \cdot R(p)} \right)^2} \tag{1}$$

In Expression (1), R(p) can be represented by the following Expression (2).

$$R(p) = \frac{1}{\pi} \int_{-\infty}^{p} \int_{-\infty}^{\infty} e^{-\left(\frac{x^2}{BWX} + \frac{y^2}{BWY}\right)} dx dy^T \qquad (2)$$

In Expression (2), BWY is a spot size of the light reflected by the MEMS mirror 830 in the Y-axis direction. p can be represented by the following Expression (3).

$$p = BWX - \frac{\Delta\lambda M}{ITU \cdot 0.5} + M \qquad (3)$$

In Expression (3), M is a length of the MEMS mirror 830 in the X-axis direction. ITU is a difference in frequency between a light reflected by the MEMS mirror 830 and a light reflected by an MEMS mirror adjacent to the MEMS mirror 830. Δλ, is a range of a deviation from a central wavelength that assures a band. Assuming that spot is a spot size when the reflected light from the MEMS mirror 830 is coupled with the coupling surface 114a, and α and β are the attenuation control values X and Y, respectively, spot can be represented by the following Expression (4).

$$spot = BWX \sin\left(\cos^{-1}\left(1 - 2R(p) + \tan^{-1}\left(\frac{\alpha}{\beta}\right)\right)\right) \qquad (4)$$

When |Δλ|=ITU·0.5, a combination of α and β satisfying the following Expression (5) is a combination of the attenuation control values X and Y maximizing the band of the output light 831.

$$G(\alpha, \beta, \Delta\lambda) - G(\alpha, \beta, 0) = \Delta IL \qquad (5)$$

In Expression (5), ΔIL is an allowable sidelobe level. G(α, β, Δλ) can be represented by the following Expression (6).

$$G(\alpha, \beta, \Delta\lambda) = \kappa e^{\left(\frac{\kappa \pi spot}{\lambda^2}\right)} \qquad (6)$$

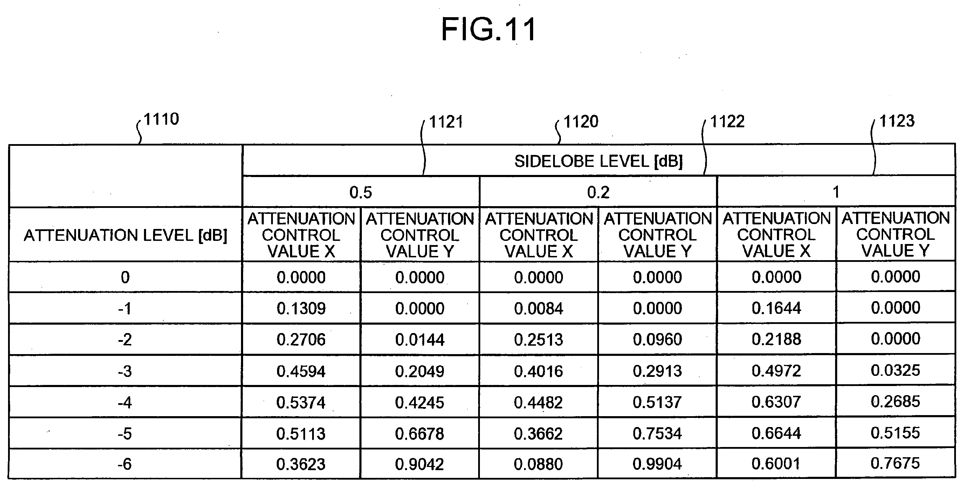

Fig. 11 is a schematic of an example of information concerning combinations of attenuation control values stored in the memory. The memory 850 in the optical switch 100 shown in Fig. 8 stores such table information as shown in Fig. 11 as information concerning combinations of the attenuation control values X and Y. As shown in Fig. 11, reference numeral 1110 denotes attenuation set values. Reference numeral 1120 denotes combinations of the attenuation control values X and Y associated with the attenuation set values 1110.

Here, each combination 1120 of the attenuation control values X and Y is stored with respect to each of plural sidelobe levels. Reference numeral 1121 denotes combinations of the attenuation control values X and Y when an allowed sidelobe level is 0.5 dB. Reference numeral 1122 denotes combinations of the attenuation control values X and Y when an allowed sidelobe level is 0.2 dB.

Reference numeral 1123 denotes combinations of the attenuation control values X and Y when an allowed sidelobe level is 1 dB. Each of the combinations 1121, 1122, and 1123 of the attenuation control values X and Y is information associated with each of the relationships 1021, 1022, and 1023 between the attenuation control values X and Y shown in Fig. 10.

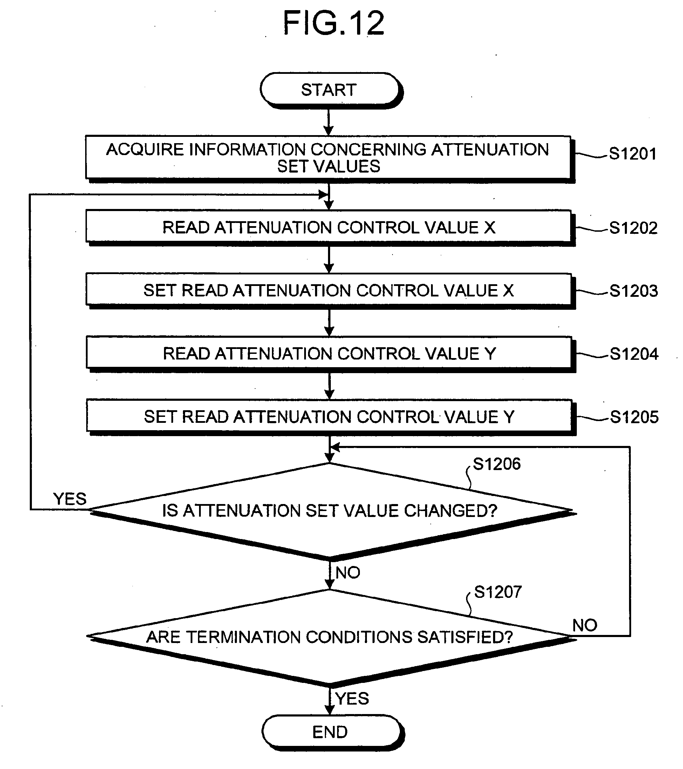

Fig. 12 is a flowchart of an example of attenuation control executed by the optical switch. Here, an allowed sidelobe level is assumed to be 0.5 dB. As shown in Fig. 12, the set-value acquiring unit 810 first acquires attenuation set-value information (step S1201). For example, the set-value acquiring unit 810 acquires attenuation set-value information indicating that an attenuation level should be set to -0.2 dB.

The driving controller 821 then reads the attenuation control value X associated with the attenuation set value indicated by the attenuation set-value information from the memory 850 (step S1202). The driving controller 821 subsequently sets the attenuation control value X read at step S1202 (step S1203). At step S1203, an angle of the MEMS mirror 830 for reflecting a light is shifted in the X-axis direction.

The driving controller 821 then reads the attenuation control value Y associated with the attenuation set value indicated by the attenuation set-value information from the memory 850 (step S1204). The driving controller 821 subsequently sets the attenuation control value Y read at step S1204 (step S1205). At step S1205, an angle of the MEMS mirror 830 for reflecting a light is shifted in the X-axis and Y-axis directions.

Whether the attenuation set value is changed is then determined (step S1206). Specifically, the set-value acquiring unit 810 acquires new attenuation set-value information, and it is determined whether the attenuation set value is changed based on whether an attenuation set value indicated by the acquired information is different from the current attenuation set value. When the attenuation set value is changed (step S1206: YES), the process returns to step S1202to continue the processing.

At step S1206, when the attenuation set value is not changed (step S1206: NO), whether termination conditions are satisfied is determined (step S1207). If the termination conditions are not satisfied (step S1207: NO), the process returns to step S1206 to continue the processing. If the termination conditions are satisfied (step S1207: YES), a series of attenuation control ends.

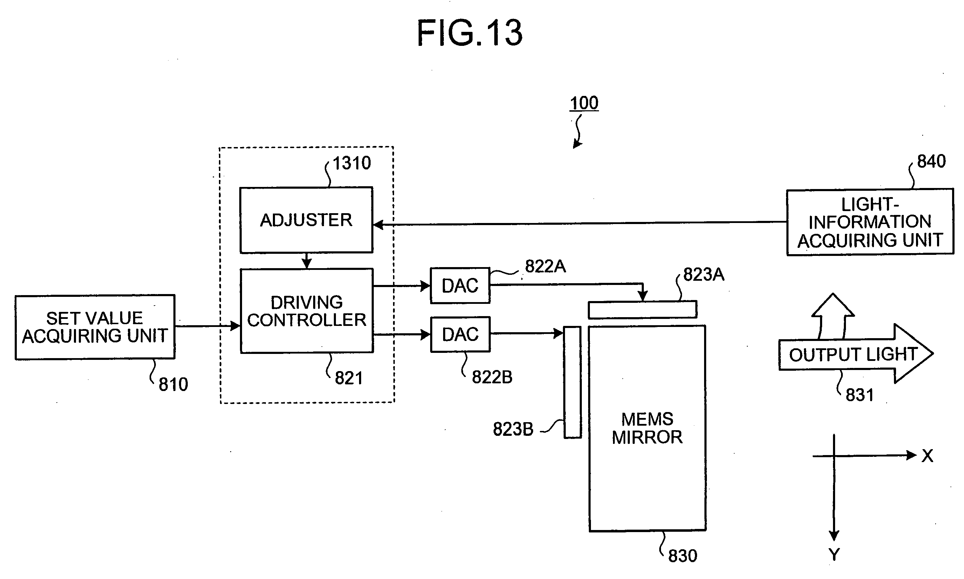

Fig. 13 is a block diagram of a part of another configuration example of the optical switch. As shown in Fig. 13, like reference numerals denote like elements shown in Fig. 8, and an explanation thereof is omitted. An optical switch 100 may execute automatic setting control that automatically sets attenuation control values X and Y maximizing a band of an output light 831. In this case, as shown in Fig. 13, an adjuster 1310 is provided in place of the memory 850 and the calculator 860 in the optical switch 100 shown in Fig. 8.

A light-information acquiring unit 840 outputs acquired information concerning the output light 831 to the adjuster 1310. The adjuster 1310 controls a driving controller 821 to adjust a combination of the attenuation control value X required to shift an angle of an MEMS mirror 830 for reflecting a light in the X-axis direction and the attenuation control value Y required to shift the angle of the MEMS mirror 830 for reflecting the light in the Y-axis direction.

The adjuster 1310 adjusts the combination of the attenuation control values X and Y based on information concerning a band of the output light 831 output from the light-information acquiring unit 840 so that the band of the output light 831 becomes maximum. The driving controller 821 and the adjuster 1310 (region indicated by a dotted line in the drawing) includes, e.g., a CPU.

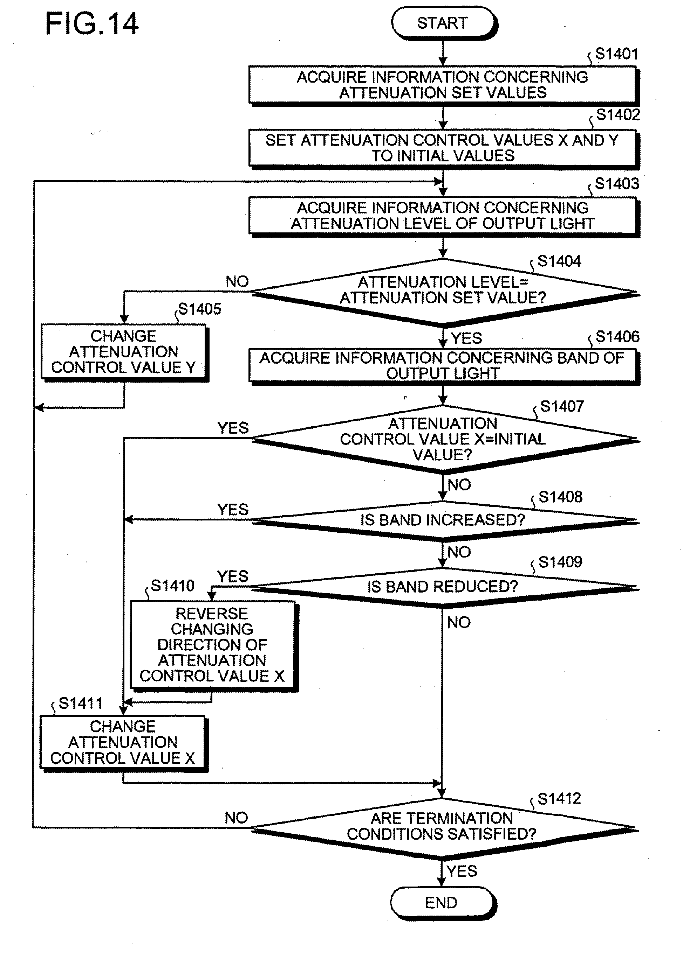

Fig. 14 is a flowchart of an example of the automatic setting control executed by the optical switch. As shown in Fig. 14, a set-value acquiring unit 810 first acquires attenuation set-value information (step S1401). The driving controller 821 then sets the attenuation control values X and Y to initial values (e.g., both 0) (step S1402). The light-information acquiring unit 840 subsequently acquires attenuation level information of the output light 831 (step S1403).

The adjuster 1310 then determines whether an attenuation level indicated by the information acquired at step S1403 is a set attenuation set value (step S1404). If the attenuation level is not the attenuation set value (step S1404: NO), the adjuster 1310 changes the attenuation control value Y (step S1405), and the process returns to step S1403 to continue the processing.

If the attenuation level is the attenuation set value at the step S1404 (step S1404: YES), the light-information acquiring unit 840 acquires information concerning a band of the output light 831 (step S1406). Then, whether the attenuation control value X is the initial value set at step S1402 is determined (step S1407).

If the attenuation control value X is not the initial value at step S1407 (step S1407: NO), whether a band of the output light 831 is increased is determined (step S1408). Specifically, whether the band of the output light 831 is increased is determined based on whether a band indicated by the information acquired at the last step S1406 is higher than a band indicated by information acquired at step S1406 in a last loop.

If the band of the output light 831 is not increased at step S1408 (step S1408: NO), whether the band of the output light 831 is reduced is determined (step S1409). Specifically, whether the band of the output light 831 is reduced is determined based on whether the band indicated by the information acquired at the last step S1406 is lower than a band indicated by information acquired at step S1406 in the last loop.

If the band of the output light 831 is reduced at step S1409 (step S1409: YES), the adjuster 1310 reverses a changing direction of the attenuation control value X (step S1410). Specifically, when the attenuation control value X is changed in a positive direction at step S1411 in the last loop, the next changing direction of the attenuation control value X is set to a negative direction. When the attenuation control value X is changed in the negative direction at step S1411 in the last loop, the next changing direction of the attenuation control value X is set to the positive direction.

If the attenuation control value X is the initial value at step S1407 (step S1407: YES), if the band of the output light 831 is increased at step S1408 (step S1408: YES), and if the changing direction of the attenuation control value X is reversed at step S1410, the adjuster 1310 changes the attenuation control value X (step S1411), and the process proceeds to step S1412 to continue the processing.

If the band of the output light 831 is not reduced at step S1409 (step S1409: NO), the process proceeds to step S1412 to continue the processing. Subsequently, whether termination conditions are satisfied is determined (step S1412). If the termination conditions are not satisfied (step S1412: NO), the process returns to step S1403 to continue the processing. If the termination conditions are satisfied (step S1412: YES), a series of automatic setting control ends.

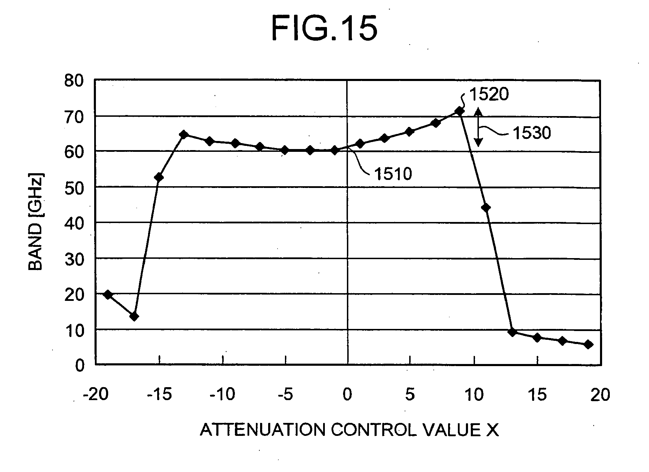

Fig. 15 is a graph of a relationship between the attenuation control value X and a band of the output light. An effect of improving a band of the output light 831 according to the present invention is explained with reference to Fig. 15. As shown in Fig. 15, an abscissa represents the attenuation control value X set by the driving controller 821. The attenuation control value Y is assumed to be set to a value by which an attenuation level of the output light 831 becomes an attenuation set value based on a relationship with the attenuation control value X. An ordinate represents a band [GHz] of the output light 831.

Reference numeral 1510 denotes a situation where the attenuation control value X is 0, and a necessary attenuation level is set by adjusting the attenuation control value Y alone like a conventional optical switch. On the other hand, the optical switch 100 according to the present invention sets a necessary attenuation level by adjusting both the attenuation control values X and Y.

Reference numeral 1520 designates a situation where both the attenuation control values X and Y are adjusted and a combination of the attenuation control values X and Y maximizing the band of the output light 831 is set. Reference numeral 1530 denotes a difference in band between the situations designated by reference numerals 1510 and 1520. As denoted by reference numeral 1530, the optical switch 100 according to the present invention can improve the band by approximately 10 GHz as compared with the conventional optical switch.

As explained above, according to the optical switch 100 of the embodiment, the coupling of the reflected light from the MEMS mirror 830 with respect to the output port 114 is shifted in both the X-axis direction and the Y-axis direction to adjust the attenuation level of the output light 831 output from the output port 114, and to adjust the sidelobe level of a spectrum of the output light 831.

Therefore, a flat band of the output light 831 can be expanded while the output light 831 is attenuated by a desired level. Furthermore, the same attenuation control is individually executed for MEMS mirrors corresponding to the other movable mirrors 142 to 145 than the movable mirror 141, thereby enabling each of reflected lights from these MEMS mirrors to be output from any one of the output ports 112 to 114 while attenuating the reflected light by a desired level, and adjusting of sidelobe levels of spectra.

Since a biaxial rotation mechanism of the MEMS mirror in the conventional optical switch can be utilized for the attenuation control of the present invention, a flat band of the output light 831 can be expanded by a simple configuration. For example, the present invention is applied to an optical switch that has the biaxial rotation mechanism of MEMS mirrors and executes port switch control when an angle of the MEMS mirror for reflecting a light is changed in a Y-axis direction while shifting the angle in an X-axis direction. As a result, the attenuation control of the present invention can be executed without any special component that executes the attenuation control.

Changing a combination of the attenuation control values X and Y enables maximizing a band of the output light 831 for each attenuation set value. As a result, even if the attenuation set value is changed, the band of the output light 831 can be expanded without replacing the MEMS mirror 830. Therefore, a cost of the optical switch can be reduced while flexibly coping with changing the attenuation set value. Since intervals between the movable mirrors 141 to 145 do not have to be narrowed, interference noise of the movable mirrors 141 to 145 can be suppressed.

As explained above, according to the optical switch and the control method of the present invention, shifting the coupling of the reflected light with respect to the input/output port in the spectral direction of the spectroscopic element and the direction perpendicular to the spectral direction enables adjusting of the attenuation level of the reflected light output as the output light from the input/output port, and also enables adjusting of the sidelobe level of the spectrum of the output light. Therefore, a flat band of the output light can be expanded while attenuating the output light by a desired level.

Although the case where the optical switch 100 is used as an optical switch with one input and multiple outputs that receives a light from one port and outputs the light from any one of the other ports is explained in the embodiment. However, the optical switch 100 having the same configuration can be used as an optical switch with multiple inputs and one output that combines respective lights input from multiple ports and outputs the combined light from one port, or an optical switch with multiple inputs and multiple outputs that receives lights from multiple ports and outputs these lights from any one of multiple ports.

Although the invention has been described with respect to a specific embodiment for a complete and clear disclosure, the appended claims are not to be thus limited but are to be construed as embodying all modifications and alternative constructions that may occur to one skilled in the art which fairly fall within the basic teaching herein set forth.

**Claims**

1.  An optical switch comprising:

    a plurality of ports aligned;
    a spectroscopic element that divides a light input to one of the ports that is an input port;
    a plurality of mirrors that are aligned in a spectral direction of the light divided, and reflect the light divided; and
    a control unit that changes an angle of each of the mirrors so that the light reflected is output to one of the ports that is an output port, and shifts the angle in the spectral direction and a direction perpendicular to the spectral direction to attenuate the light output from the output port.

2.  The optical switch according to claim 1, further comprising
    a storing unit that stores information concerning a combination of a degree by which the angle is shifted in the spectral direction, and a degree by which the angle is shifted in the direction perpendicular to the spectral direction, the combination maximizing a band of the light output from the output port, wherein
    the control unit shifts the angle based on the information concerning the combination.

3.  The optical switch according to claim 2, further comprising
    a first acquiring unit that acquires information concerning an attenuation level to be set, wherein
    the storing unit stores the information concerning the combination associated with the attenuation level, and
    the control unit shifts the angle based on the information concerning the combination associated with the attenuation level.

4.  The optical switch according to claim 2, further comprising:

    a second acquiring unit that acquires information concerning the band; and
    a calculating unit that calculates, while changing the angle, the combination maximizing the band based on the information acquired by the second acquiring unit, wherein
    the storing unit stores the information concerning the combination calculated.

5.  The optical switch according to claim 1, further comprising:

    a second acquiring unit that acquires information concerning a band of the light output from the output port; and
    an adjusting unit that adjusts, based on the information concerning the band, a combination of a degree by which the angle is shifted in the spectral direction and a degree by which the angle is shifted in the direction perpendicular to the spectral direction so that the band becomes maximum.

6.  The optical switch according to claim 1, wherein
    each of the mirrors is rotatable about a first rotation axis and a second rotation axis, and
    the control unit slightly rotates each of the mirrors about the first rotation axis to shift the angle in the spectral direction and about the second rotation axis to shift the angle in the direction perpendicular to the spectral direction.

7.  The optical switch according to claim 1, wherein
    the ports are aligned in the direction perpendicular to the spectral direction, and
    the control unit changes the angle in an alignment direction of the ports to switch the output port, and shifts the angle in the spectral direction and the alignment direction of the ports to attenuate the light output from the output port.

8.  The optical switch according to claim 1, wherein the control unit changes the angle in the direction perpendicular to the spectral direction while diverting the angle in the spectral direction to switch the output port.

9.  The optical switch according to claim 1, wherein the mirrors are a plurality of MEMS mirrors provided in an array in the spectral direction.

10. A method of controlling an optical switch that includes a plurality of ports aligned; a spectroscopic element that divides a light input to one of the ports that is an input port; a plurality of mirrors that are aligned in a spectral direction of the light divided, and reflect the light divided, the method comprising:

    switching an output port that is one of the ports and to which the light reflected is output by changing an angle of each of the mirrors; and
attenuating the light output from the output port by shifting the angle in the spectral direction and a direction perpendicular to the spectral direction.

**11.** An optical switch comprising:

a plurality of ports aligned;
a spectroscopic element that divides a light input to one of the ports that is an input port;
a plurality of mirrors that reflect the light divided to be output to at least one of the ports that is an output port; and
a control unit that shifts an angle of at least one of the mirrors in a spectral direction of the light divided, and a direction perpendicular to the spectral direction to attenuate the light output from the output port.

**12.** The optical switch according to claim 11, wherein the control unit shifts the angle in a spectral direction and the direction perpendicular to the spectral direction at a same time to attenuate the light output from the output port.

# FIG.1

EP 2 028 511 A1

# FIG.2

EP 2 028 511 A1

# FIG.3

EP 2 028 511 A1

# FIG.4

# FIG.5

# FIG.6

# FIG.7

EP 2 028 511 A1

# FIG.8

EP 2 028 511 A1

# FIG.9

START

S901

SET ATTENUATION SET VALUE TO INITIAL VALUE

S902

SET ATTENUATION CONTROL VALUES X AND Y
TO INITIAL VALUES

S903

ACQUIRE INFORMATION CONCERNING
ATTENUATION LEVEL OF OUTPUT LIGHT

S904

ATTENUATION LEVEL=
ATTENUATION SET VALUE?

NO

S905

CHANGE
ATTENUATION
CONTROL VALUE Y

YES

S906

ACQUIRE INFORMATION CONCERNING BAND
OF OUTPUT LIGHT

S907

IS INFORMATION
CONCERNING BAND ACQUIRED WITH
RESPECT TO ALL ATTENUATION
CONTROL VALUES X?

NO

S908

CHANGE
ATTENUATION
CONTROL VALUE X

YES

S909

CALCULATE COMBINATION OF ATTENUATION
CONTROL VALUES X AND Y MAXIMIZING BAND

S910

STORES INFORMATION CONCERNING
CALCULATED COMBINATION OF ATTENUATION
CONTROL VALUES X AND Y

S911

IS INFORMATION
CONCERNING COMBINATION OF
ATTENUATION CONTROL VALUES
STORED WITH RESPECT TO ALL
ATTENUATION
VALUES?

NO

S912

CHANGE
ATTENUATION SET
VALUE

YES

END

# FIG.10

# FIG.11

| ATTENUATION LEVEL [dB] | SIDELOBE LEVEL [dB] | | | | | |
|---|---|---|---|---|---|---|
| | 0.5 | | 0.2 | | 1 | |
| | ATTENUATION CONTROL VALUE X | ATTENUATION CONTROL VALUE Y | ATTENUATION CONTROL VALUE X | ATTENUATION CONTROL VALUE Y | ATTENUATION CONTROL VALUE X | ATTENUATION CONTROL VALUE Y |
| 0 | 0.0000 | 0.0000 | 0.0000 | 0.0000 | 0.0000 | 0.0000 |
| -1 | 0.1309 | 0.0000 | 0.0084 | 0.0000 | 0.1644 | 0.0000 |
| -2 | 0.2706 | 0.0144 | 0.2513 | 0.0960 | 0.2188 | 0.0000 |
| -3 | 0.4594 | 0.2049 | 0.4016 | 0.2913 | 0.4972 | 0.0325 |
| -4 | 0.5374 | 0.4245 | 0.4482 | 0.5137 | 0.6307 | 0.2685 |
| -5 | 0.5113 | 0.6678 | 0.3662 | 0.7534 | 0.6644 | 0.5155 |
| -6 | 0.3623 | 0.9042 | 0.0880 | 0.9904 | 0.6001 | 0.7675 |

1110  1121  1120  1122  1123

EP 2 028 511 A1

# FIG.12

```
            ┌─────────┐
            │  START  │
            └─────────┘
                 │
                 ▼
┌──────────────────────────────────────────────┐
│ ACQUIRE INFORMATION CONCERNING ATTENUATION    │─── S1201
│                SET VALUES                     │
└──────────────────────────────────────────────┘
                 │
                 ▼
┌──────────────────────────────────────────────┐
│       READ ATTENUATION CONTROL VALUE X        │─── S1202
└──────────────────────────────────────────────┘
                 │
                 ▼
┌──────────────────────────────────────────────┐
│     SET READ ATTENUATION CONTROL VALUE X      │─── S1203
└──────────────────────────────────────────────┘
                 │
                 ▼
┌──────────────────────────────────────────────┐
│       READ ATTENUATION CONTROL VALUE Y        │─── S1204
└──────────────────────────────────────────────┘
                 │
                 ▼
┌──────────────────────────────────────────────┐
│     SET READ ATTENUATION CONTROL VALUE Y      │─── S1205
└──────────────────────────────────────────────┘
                 │
                 ▼
                              S1206
       ◇ IS ATTENUATION SET VALUE CHANGED? ◇
   YES                                        
                 │ NO
                 ▼
                              S1207
       ◇ ARE TERMINATION CONDITIONS SATISFIED? ◇   NO
                 │ YES
                 ▼
            ┌─────────┐
            │   END   │
            └─────────┘
```

# FIG.13

100

1310

ADJUSTER

840

LIGHT-
INFORMATION
ACQUIRING UNIT

SET VALUE
ACQUIRING UNIT

DRIVING
CONTROLLER

DAC — 822A

823A

DAC

822B

823B

MEMS
MIRROR

OUTPUT LIGHT

831

810

821

830

X

Y

EP 2 028 511 A1

# FIG.14

START

ACQUIRE INFORMATION CONCERNING ATTENUATION SET VALUES    ⌐S1401

SET ATTENUATION CONTROL VALUES X AND Y TO INITIAL VALUES    ⌐S1402

ACQUIRE INFORMATION CONCERNING ATTENUATION LEVEL OF OUTPUT LIGHT    ⌐S1403

ATTENUATION LEVEL= ATTENUATION SET VALUE?    ⌐S1404

NO → CHANGE ATTENUATION CONTROL VALUE Y    ⌐S1405

YES

ACQUIRE INFORMATION CONCERNING BAND OF OUTPUT LIGHT    ⌐S1406

ATTENUATION CONTROL VALUE X=INITIAL VALUE?    ⌐S1407

YES

NO

IS BAND INCREASED?    ⌐S1408

YES

NO

IS BAND REDUCED?    ⌐S1409

YES

REVERSE CHANGING DIRECTION OF ATTENUATION CONTROL VALUE X    ⌐S1410

NO

CHANGE ATTENUATION CONTROL VALUE X    ⌐S1411

ARE TERMINATION CONDITIONS SATISFIED?    ⌐S1412

NO

YES

END

28

# FIG.15

# FIG.16

EP 2 028 511 A1

FIG.17

# FIG.18

# FIG.19

# FIG.20

# FIG.21

# FIG.22

1704a

1752

1752

λ2 →

λ2

X

Y

# FIG.23

2301

2310

2320

2302

WAVELENGTH

λ1    λ2

# FIG.24

Europäisches
Patentamt

European
Patent Office

Office européen
des brevets

# EUROPEAN SEARCH REPORT

Application Number

EP 08 00 9709

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2007/078415 A (CAPELLA PHOTONICS [US]; DAVIS JOSEPH E [US]; TREMAINE BRIAN P [US]) 12 July 2007 (2007-07-12) * page 7, lines 12,13 * * page 8, lines 2,3 * * page 11, line 187 - page 22, line 5 * * page 24, lines 12-16 * | 1-6,8-12 | INV. G02B6/35 |
| Y | * figures 1-10 * | 7 | |
| Y | EP 1 674 906 A (FUJITSU LTD [JP]) 28 June 2006 (2006-06-28) * figure 13 * | 7 | |
| X | EP 1 580 583 A (FUJITSU LTD [JP]) 28 September 2005 (2005-09-28) * paragraphs [0015], [0016], [0027] - [0051]; figures 1-3 * | 1,6-11 | |

TECHNICAL FIELDS
SEARCHED       (IPC)

G02B

The present search report has been drawn up for all claims

| Place of search | Date of completion of the search | Examiner |
|---|---|---|
| Berlin | 10 November 2008 | Fazio, Valentina |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

**ANNEX TO THE EUROPEAN SEARCH REPORT
ON EUROPEAN PATENT APPLICATION NO.**
EP 08 00 9709

This annex lists the patent family members relating to the patent documents cited in the above-mentioned European search report.
The members are as contained in the European Patent Office EDP file on
The European Patent Office is in no way liable for these particulars which are merely given for the purpose of information.

10-11-2008

| Patent document cited in search report | | Publication date | Patent family member(s) | | Publication date |
|---|---|---|---|---|---|
| WO 2007078415 | A | 12-07-2007 | NONE | | |
| EP 1674906 | A | 28-06-2006 | CN | 1797062 A | 05-07-2006 |
| | | | CN | 101101358 A | 09-01-2008 |
| | | | JP | 2006184472 A | 13-07-2006 |
| | | | US | 2006140536 A1 | 29-06-2006 |
| EP 1580583 | A | 28-09-2005 | JP | 2005275094 A | 06-10-2005 |
| | | | US | 2005213178 A1 | 29-09-2005 |

EPO FORM P0459

For more details about this annex : see Official Journal of the European Patent Office, No. 12/82

## REFERENCES CITED IN THE DESCRIPTION

**Patent documents cited in the description**

- JP 2007213756 A
- JP 2004070053 A